Europäisches Patentamt

European Patent Office

Office européen des brevets

(11) Veröffentlichungsnummer: **0 011 589**
**B1**

# (12) EUROPÄISCHE PATENTSCHRIFT

(45) Veröffentlichungstag der Patentschrift:
29.12.82

(21) Anmeldenummer: 79710011.2

(22) Anmeldetag: 09.11.79

(51) Int. Cl.³: **B 60 T 7/20,** F 16 D 51/60

(54) Auflauf-Radbremse.

(30) Priorität: 10.11.78 DE 2848744

(43) Veröffentlichungstag der Anmeldung:
28.05.80 Patentblatt 80/11

(45) Bekanntmachung des Hinweises auf die Patenterteilung:
29.12.82 Patentblatt 82/52

(84) Benannte Vertragsstaaten:
AT BE FR GB IT NL

(56) Entgegenhaltungen:
DE-A-1 933 435
DE-A-2 114 659
DE-A-2 248 061
DE-A-2 257 893
DE-A-2 413 131
DE-C-880 704
FR-A-982 408
FR-A-1 194 744

(73) Patentinhaber: Peitz, Josef, sen., Michaelstrasse 31,
D-4791 Schloss Neuhaus-Sennelager (DE)

(72) Erfinder: Peitz, Josef, sen., Michaelstrasse 31,
D-4791 Schloss Neuhaus-Sennelager (DE)

(74) Vertreter: Loesenbeck, Otto, Dr. et al, Herforder
Strasse 17, D-4800 Bielefeld 1 (DE)

Auflauf-Radbremse

Die vorliegende Erfindung bezieht sich auf eine Auflauf-Radbremse mit zwei Bremsbacken in Servo-Anordnung, die über einen schwimmenden Bolzen gegeneinander und gegen ein Widerlager gestützt sind.

Aus dem »ATE-Bremsenhandbuch« aus dem Jahr 1960 der Firma Alfred Tewes, Seite 41, Abbildung 56, geht das Prinzip einer Servo-Bremse mit Abstützung der Backen gegeneinander über einen schwimmenden Bolzen hervor.

Aus dem DE-U-7 006 648 geht eine Innenbakken-Servobremse für auflaufgebremste Kraftfahrzeuganhänger hervor, bei der nur das Auflaufgestänge an die Innenbacken-Servobremse angeschlossen ist. Das Feststellbremsgestänge wirkt auf eine zweite Bremse mit in Vorwärts- und Rückwärtsfahrtrichtung etwa gleicher Bremswirkung ein.

Es ist sowohl im Hinblick auf ein ruhiges Fahrverhalten wie auch im Hinblick auf die Fahrsicherheit bei einem Fahrzeug, bestehend aus einem Schlepperfahrzeug und einem auflaufgebremsten Anhänger, von ausschlaggebender Bedeutung, daß bei verhältnismäßig kleinem Zuspannweg in Auflaufrichtung möglichst hohe Bremskräfte erzielt werden. Ein kurzer Zuspannweg ist deshalb wünschenswert, weil dadurch das Fahrverhalten des ganzen Zuges ruhiger wird als bei einem langen Zuspannweg, da der Zuspannweg dasjenige Maß darstellt, um welches der Anhänger jeweils auf das Schlepperfahrzeug aufläuft bzw. nach Aufhebung der Bremswirkung gegenüber dem Schlepperfahrzeug zurückbleibt. Je kürzer dieser Weg ist, desto ruhiger ist das Fahrverhalten.

Die bei kurzem Zuspannweg angestrebten hohen Bremskräfte sind insofern besonders bedeutsam, als die nicht von der Auflauf-Radbremse auffangbaren Kräfte als Schubkräfte in Fahrtrichtung auf das Schlepperfahrzeug einwirken. Diese Kräfte müßten also von der Bremsanlage des Schlepperfahrzeuges abgefangen werden.

Die Aufgabe der vorliegenden Erfindung besteht somit darin, eine Servo-Bremse gemäß dem Oberbegriff des Hauptanspruches für Auflaufbremsen mit Rückfahrautomatik zu schaffen, wobei in Auflaufrichtung sehr hohe Bremskräfte bei möglichst kurzem Zuspannweg möglich sind.

Die Lösung dieser Aufgabe ergibt sich aus dem kennzeichnenden Teil des Patentanspruches 1.

Bei einer Betätigung des Zuspann-Nockens wird der Träger in Umfangsrichtung der Bremse bewegt, so daß der Bolzen zwischen den beiden Bremsbacken zunächst einmal ebenfalls geringfügig in Umfangsrichtung bewegt wird. Dadurch verliert die erste Bremsbacke kurzzeitig ihren Kontakt mit dem besagten Bolzen. Durch die beim Abbremsen entstehenden Reibkräfte wird die ebenfalls angepreßte erste Bremsbacke nun auch in Umfangsrichtung mitgenommen, bis sie wieder zur Anlage am Bolzen kommt. Dabei läuft die erste Bremsbacke auf den Steigbahnen gleitend zunehmend stärker an die Bremstrommel an und erzeugt sehr hohe Bremskräfte.

Dadurch können die Zuspannkräfte ebenso relativ gering sein wie der erforderliche Zuspannweg.

Aus der DE-A-1 933 435 ist eine Auflauf-Radbremse mit zwei Bremsbacken in Symplex-Anordnung bekannt, aus der die Merkmale a bis d gemäß dem vorliegenden Hauptanspruch für sich gesehen bereits bekannt sind. (Ähnliche Bremskonstruktionen sind aus der DE-A-2 248 061 und aus der DE-A-2 413 131.)

Abgesehen davon, daß es sich bei den vorgenannten Bremskonstruktionen um sogenannte Symplex-Bremsen handelt, können bei den vorbekannten Bremsen die dort vorgesehenen Steigbahnen nicht die oben beschriebene Funktion erfüllen. Bei einem Bremsvorgang während der Vorwärtsfahrt kommen nämlich diese Steigbahnen nicht zur Wirkung. Wie aus den genannten Druckschriften ohne weiteres erkennbar ist, liegen die Führungsnocken bzw. Führungsrollen bei einer solchen Bremsung am Ende der Steigbahn an einem festen Anschlag an. Eine Verstärkung der Bremswirkung kann somit nicht eintreten.

Aus dem DE-U-7 334 809 und aus der DE-A-2 114 659 sind nun Auflaufbremsen mit Rückfahrautomatik bekannt, bei denen ebenfalls Steigbahnen vorgesehen sind, deren Neigung im gleichen Sinne wie beim Anmeldungsgegenstand verläuft. Die Steigbahnen selbst sind bei einer Vorwärtsbremsung durch keinen Anschlag begrenzt.

Bei den aus den zuletzt genannten Druckschriften bekannten Bremsen kann jedoch ebenfalls nicht die beim Anmeldungsgegenstand erreichte Wirkung eintreten. Bei der Bremse nach dem DE-U-7 334 809 sind die Bremsbacken durch stärkere Zugfedern (z. B. 49) mit ihrem auflaufenden Ende an der jeweiligen Abstützung (30 bzw. 31) abgestützt. Hierdurch ist eine Keilwirkung durch Einlaufen in den »Keilspalt« nicht möglich. Das gleiche gilt sinngemäß bei der Konstruktion nach der DE-A-2 114 659, da bei dieser Bremse das Ende 73 der Bremsbacke 7 bei einer Vorwärtsbremsung keine Relativverschiebung in Umfangsrichtung ausführen kann.

Aus der DE-A-2 257 893, Fig. 11 bis 13, ist eine Auflauf-Radbremse in Servoanordnung bekannt, bei welcher die bei Vorwärtsfahrt auflaufende erste Bremsbacke 101 über einen Hebel 105 gegen die Bremstrommel 1 spreizbar ist. Der Hebel 105 ist, wie sich aus dem letzten Absatz auf Seite 22 der DE-A-2 257 893 ergibt, das letzte Glied einer mechanischen Zuspanneinrichtung. Der Hebel 105 wirkt mit der Bremsbacke 101 über eine Führungsrolle 103 zusammen, wobei gemäß Fig. 13 vorgesehen ist, daß der beim Ausführungsbeispiel nach Fig. 11 konzentrische Abschnitt 111 der Rollenbahn 110 des Hebels 105 durch eine Erhöhung 114 ersetzt ist. Diese Erhöhung 114 dient dem Zwecke der Hubverminderung in Richtung B entsprechend dem Teil 98 in Fig. 8.

Zu Fig. 8 ist ausgeführt, daß der Arbeitsbereich der Rollenbahn 96, der der Drehrichtung B zugeordnet ist, eine Abweichung 98 von der strichpunktiert eingezeichneten konzentrischen Form entsprechend 81 (siehe Fig. 5) aufweist, um Elastizitäts- und Wärmedehnungen auszugleichen, jedoch ausschließlich für Drehrichtung B.

Die Erhöhung 114 des Hebels 105 nach Fig. 13 dient somit dem gleichen Zweck.

Mit anderen Worten wird auch bei einer Bremse nach den Fig. 11 bis 13 der DE-A-2 257 893 nicht die Funktion erreicht, wie sie beim Anmeldungsgegenstand durch die Steigbahnen erzielt wird. Die Bremsbacke 101 ist über ein Schiebeglied 42 an der Sekundärbacke 47 abgestützt und diese ist wiederum an einem Schiebeglied 41 abgestützt. Die Schiebeglieder 41 und 42 sind in Trägern 39 und 40 geführt, die am Bremsbackenträger 2 befestigt sind. Durch die Betätigung des Hebels 105 wird die erste Bremsbacke 101 an die Bremstrommel 1 angedrückt und die Erhöhung 114 des Hebels 105 dient lediglich dem Zweck, unter allen Betriebsbedingungen einen kurzen Zuspannweg beizubehalten. Ein Einlaufen der ersten Bremsbacke 101 in einen Keilspalt und eine damit erzielte Erhöhung der Bremskraft ist nicht möglich, da die erste Bremsbacke 101 in Umfangsrichtung bei Auflaufbremsung stets vollkommen abgestützt ist.

Bei Rückwärtsfahrt wird die erste Bremsbacke einer anmeldungsgemäßen Bremse entgegen der Wirkung des Zuspanngliedes mitgenommen und kann dabei entlang der Steigbahnen »freilaufen«, so daß in dieser Fahrtrichtung praktisch keinerlei Bremswirkung erzielt wird.

Bei Handbremsung wird das Zuspannglied noch weiter verstellt, als dies bei maximal möglichem Auflaufweg der Fall ist, wodurch die Führungsnocken, Führungsrollen od. dgl. des Trägers einen verhältnismäßig großen Weg entlang der Steigbahnen zurücklegen. Wird nun die erste Bremsbacke in Rückwärts-Fahrtrichtung mitgenommen, so bewegt sich dieselbe mit ihrem freien Ende auf das Widerlager zu und stützt sich an demselben ab, so daß trotz nunmehr etwas geringerer Andruckkraft eine für die Handbremsung ausreichende Bremskraft vorhanden ist.

Bei möglicher Tendenz zum Vorwärtsfahren im handgebremsten Zustand wird die erste Bremsbacke wieder in Auflaufrichtung mitgenommen und die Bremskraft wird sich, bedingt durch die Steigbahnen, auch weiter verstärken, so daß auch in dieser möglichen Fahrtrichtung eine enorm hohe Bremskraft sichergestellt ist.

Durch die Weiterbildung des Anmeldungsgegenstandes nach den Merkmalen des Unteranspruches 2 oder des Unteranspruches 5 wird der Vorteil erzielt, daß der Zuspann-Nocken nicht schwimmend gelagert ist und somit die Radbremse auch für Achstunnel ohne eine durchgehende Mittelachse geeignet ist.

Da die erzielbaren Bremskräfte mit der anmeldungsgemäßen Auflauf-Radbremse sehr hoch sind, ist es vorteilhaft, das Widerlager an der Radachse zu befestigen.

Durch die Weiterbildung des Anmeldungsgegenstandes nach den Merkmalen des Anspruches 4 wird der Vorteil erzielt, daß bei Handbremsung und bei Tendenz zum Rückwärtsfahren die erste Bremsbacke einen Weg in Richtung des Widerlagers zurücklegen und sich an diesem abstützen kann. Nunmehr kann sich die erste Bremsbacke fest an die Bremstrommel pressen und für eine ausreichende Handbremswirkung gegen Rückwärtsfahrt sorgen.

Ein Ausführungsbeispiel der Erfindung ist in den Zeichnungen dargestellt und wird im folgenden näher beschrieben. Es zeigt

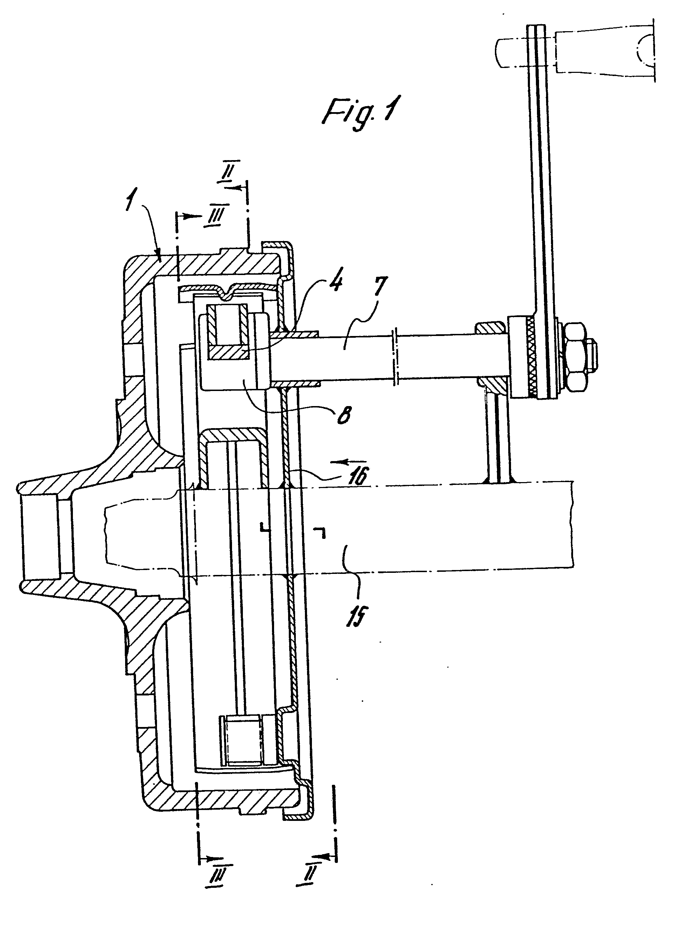

Fig. 1 einen Horizontalschnitt durch eine erfindungsgemäße Auflauf-Radbremse,

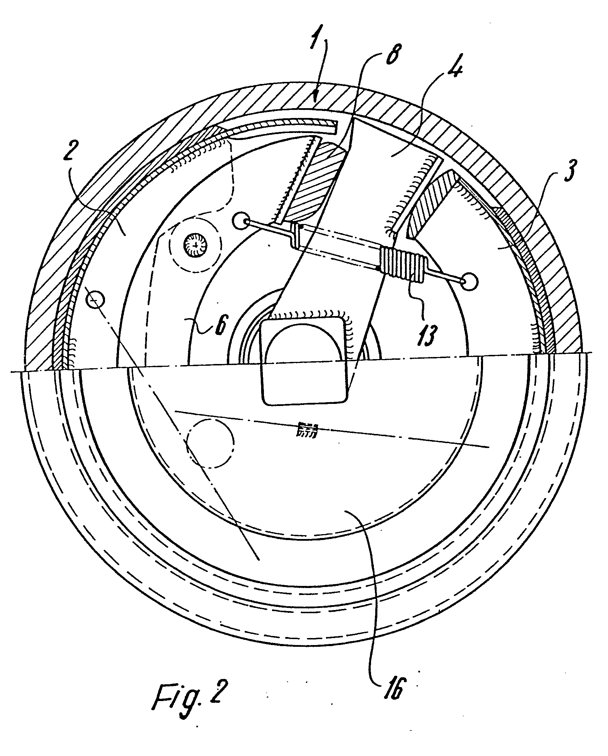

Fig. 2 einen Schnitt nach der Linie II-II in Fig. 1,

Fig. 3 einen Schnitt nach der Linie III-III in Fig. 1 im ungebremsten Zustand,

Fig. 4 einen der Fig. 3 entsprechenden Schnitt in Bremsstellung.

Bei der in den Zeichnungen gezeigten Auflauf-Radbremse sind in der einer Bremstrommel 1 zwei Bremsbacken 2 und 3 schwimmend gelagert.

An der Bremsbacke 3, die sich an einem Widerlager 4 abstützt, ist ein Bolzen 5 befestigt, an dem sich die andere Bremsbacke 2 abstützt.

An dem besagten Bolzen 5 stützt sich auch ein Träger 6 ab, dessen anderes Ende einem an einer Welle 7 exzentrisch befestigten Nocken 8 gegenüberliegt. Dieser Nocken 8 bildet das Zuspannglied für die Radbremse.

Am Träger 6 sind zwei Führungsrollen 9 und 10 gelagert, auf denen sich die erste Bremsbacke 2 abstützt. Die erste Bremsbacke 2 ist in den Bereichen, in denen sie auf den Führungsrollen 9 und 10 abgestützt ist, mit Steigbahnen 11 und 12 versehen, wobei diese Steigbahnen 11 und 12 mit der äußeren Krümmung der Bremsbacke 2 eine Keilfläche einschließen, die sich in Auflaufrichtung der ersten Bremsbacke 2 verjüngen. Die Auflaufrichtung der ersten Bremsbacke 2 entspricht der Vorwärtsdrehrichtung der Bremstrommel 1, die in den Figuren durch den mit V bezeichneten Pfeil gekennzeichnet ist.

Der Träger 6 ist mit der zweiten Bremsbacke 3 durch Federn 13 verbunden, die sowohl den Träger 6 als auch die zweite Bremsbacke 3 nach innen, d. h. von der Bremstrommel 1 wegziehen. Die erste Bremsbacke 2 ist durch eine Feder 14 mit dem Träger 6 verbunden und wird durch diese Feder 14 nach innen gezogen.

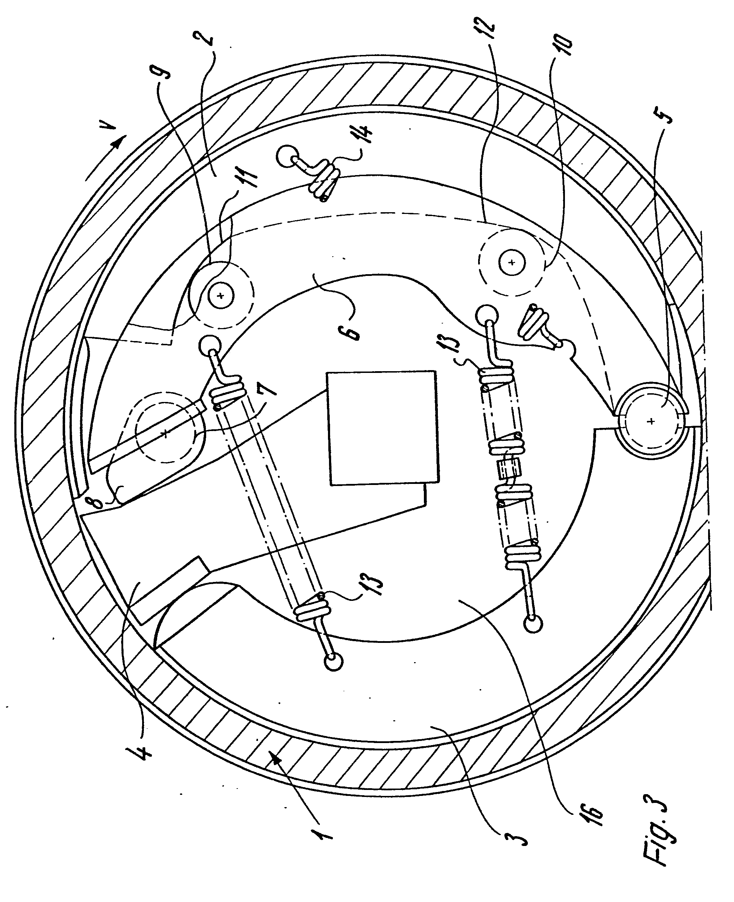

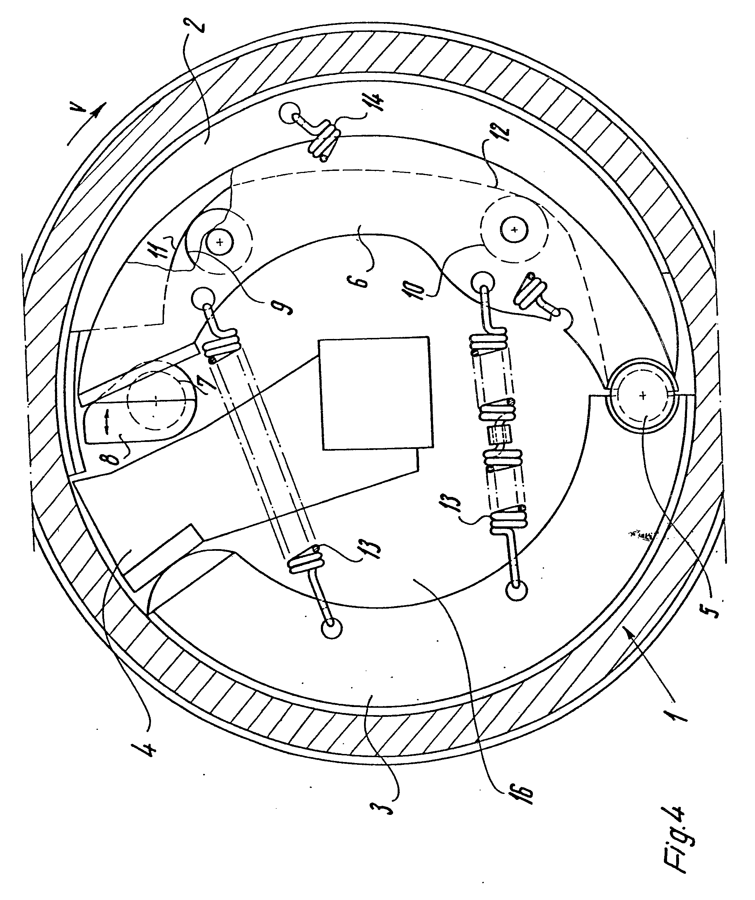

Das Widerlager 4 ist an der Radachse 15 befestigt. Der als Zuspannglied dienende Nocken 8 wird über die Welle 7, die im Schild 16 gelagert ist, bei Auflaufen oder bei Betätigung einer in den Zeichnungen nicht dargestellten Handbremseinrichtung betätigt. In Fig. 3 ist der unbetätigte und in Fig. 4 der betätigte Zustand des Nockens 8 dargestellt. Durch Verschwenken des Nockens 8, der auf den Träger 6 einwirkt, wird der besagte Träger 6 gegen die Bremstrommel 1 geringfügig gespreizt und außerdem in Umfangsrichtung bewegt, so daß der Bolzen 5 bei Einleitung des Bremsvorganges zunächst einmal geringfügig in Umfangsrichtung verschoben wird, so daß die erste Bremsbacke 2 kurzzeitig keinen Kontakt mehr mit dem Bolzen 5 hat. Durch die beim Abbremsen entstehenden Reibkräfte wird nun die erste Bremsbacke 2 in Umfangsrichtung mitgenommen, bis sie wieder zur Anlage am Bolzen 5 kommt. Dabei läuft die erste Bremsbacke 2 entlang ihrer Steigbahnen 11 und 12 immer fester an die Bremstrommel 1 an und somit kommt es zu sehr hohen Bremskräften. Die dafür notwenige Zuspannung braucht nur sehr gering zu sein, da aufgrund der Anordnung der Steigbahnen 11 und 12 die erste Bremsbacke 2 mit sehr hoher Kraft an die Bremstrommel 1 gedrückt wird. Aufgrund der Servo-Anordnung der beiden Bremsbacken 2 und 3 wird die Bremsbacke 3 ebenfalls sehr fest an die Bremstrommel 1 angepreßt.

Die geringe erforderliche Zuspannung zum Abbremsen bringt den Vorteil eines geringen Auflaufweges mit sich. Dadurch wird eine sehr ruhige Fahrweise ermöglicht.

Bei Rückwärtsfahrt dreht sich die Bremstrommel 1 entgegen der in den Zeichnungen angegebenen Pfeilrichtung V, wodurch die Bremsbacken 2 und 3 in der gleichen Richtung mitgenommen werden. In dieser Bewegungsrichtung läuft die erste Bremsbacke 2 entlang der Steigbahnen 11 und 12 zurück, d. h., die erste Bremsbacke 2 läuft sich gegenüber der Bremstrommel 1 frei und ebenso die Bremsbacke 3. Dadurch ist bei Rückwärtsfahrt trotz erfolgter Zuspannung praktisch keinerlei Bremswiderstend vorhanden.

Wird die Handbremse betätigt, erfolgt eine größere Verstellung des Nockens 8, als dies bei maximal möglichem Auflaufweg der Fall ist. Durch diese erhöhte Zuspannung wird erreicht, daß bei Tendenz zum Rückwärtsfahren die erste Bremsbacke 2 einen kurzen Weg in denjenigen Bereichen der Steigbahnen 11 und 12 zurücklegen kann, die konzentrisch zur äußeren Krümmung der Bremsbacke 2 verlaufen. Dabei kommt es zur Abstützung der Bremsbacke 2 am Widerlager 4, so daß sich die Bremsbacke 2 nunmehr fest an die Bremstrommel 1 preßt, und für eine ausreichende Handbremswirkung gegen Rückwärtsfahren sorgt. Bei möglicher Tendenz zum Vorwärtsfahren wirkt die Bremse in der gleichen Weise wie dies beim Auflaufen der Fall ist.

Die Erfindung ist nicht auf das in den Zeichungen dargestellte Ausführungsbeispiel beschränkt. So ist es beispielsweise möglich, die erste Bremsbacke 2 lediglich auf einer Führungsrolle 9 abzustützen, die dann vorzugsweise in dem Bereich angeordnet ist, der dem Nocken 8 zugewandt ist. Die Abstützung der ersten Bremsbacke 2 über zwei Führungsrollen 9 und 10, wie dies in den Ausführungsbeispielen gezeigt ist, bietet den Vorteil einer besseren und gleichmäßigeren Verteilung der beim Bremsvorgang entstehenden Kräfte. Dadurch wird eine leichtere Bauweise möglich.

Weiterhin ist es denkbar und möglich, das Widerlager 4 nicht an der Radachse 15 zu befestigen, sondern in üblicher Weise am Schild 16. Dafür ist es dann aber erforderlich, das Schild 16 und das daran befestigte Widerlager sehr massiv auszuführen, da die durch die erfindungsgemäße Radbremse erreichbaren Bremskräfte sehr hoch sind.

Außer den schon erwähnten Vorteilen bringt eine erfindungsgemäße Radbremse auch noch folgende Vorteile mit sich: -

Da der Nocken 8 exzentrisch an der Welle 7 angeordnet ist, wird ein großer Zustellweg erreicht, wodurch sich eine Nachstellung an den Bremsbacken erübrigt.

Die Lagerung der Welle 7 im Schild 16 ist eine feste Lagerung, d. h., daß der Zuspann-Nocken nicht schwimmend gelagert ist und somit eignet sich die erfindungsgemäße Radbremse auch für Achsstummel ohne eine durchgehende Mittelachse.

Durch die schwimmende Lagerung der beiden Bremsbacken 2 und 3 wird eine gleichmäßige Anlegung des Bremsbelages der Bremsbacken an die Bremstrommel erreicht.

Die in den Zeichnungen dargestellte und in vorliegender Beschreibung ausführlich geschilderte Radbremse ist für ein Anhängerfahrzeug mit einer Auflaufbremseinrichtung konzipiert.

Beim dargestellten Ausführungsbeispiel ist die Welle 7, an der der Nocken 4 angeordnet ist, im Schild 16 gelagert. Es besteht aber auch die Möglichkeit, diese Welle 7 in dem an der Radachse 15 befestigten Widerlager 4 zu lägern.

## Patentansprüche

1. Auflauf-Radbremse mit zwei Bremsbacken (2, 3) in Servo-Anordnung, die über einen schwimmenden Bolzen (5) gegeneinander und gegen ein Widerlager (4) abgestützt sind, gekennzeichnet durch folgende Merkmale:

a) die bei Vorwärtsfahrt auflaufende erste Bremsbacke (2) ist auf mindestens einem Führungsnocken, einer Führungsrolle (9, 10) od. dgl. eines Trägers (6) gelagert,

b) der Träger (6) ist durch ein aus einem exzentrisch auf einer Welle (7) angeordneten und in Auflaufrichtung der ersten Bremsbacke (2) wirkenden Zuspann-Nocken (8) bestehendes Zuspannglied gegen die Bremstrommel (1) spreizbar,

c) die erste Bremsbacke (2) ist in den Bereichen, in denen sie auf den Führungsnocken, Führungsrollen (9, 10) od. dgl. aufliegt, mit Steigbahnen (11, 12) versehen,

d) die Steigbahnen (11, 12) schließen jeweils mit der äußeren Krümmung der ersten Bremsbacke (2) eine sich in Auflaufrichtung verjüngende Keilfläche ein,

e) der Träger (6) ist an seinem dem Zuspann-Nocken (8) abgewandten Ende über den Bolzen (5) gegen die zweite Bremsbacke (3) abgestützt.

2. Auflauf-Radbremse nach Anspruch 1, dadurch gekennzeichnet, daß die Welle (7) des das Zuspannglied bildenden Zuspann-Nockens (8) fest im Schild (16) gelagert ist.

3. Auflauf-Radbremse nach Anspruch 1 oder 2, dadurch gekennzeichnet, daß das Widerlager (4) an der Radachse (15) befestigt ist.

4. Auflauf-Radbremse nach Anspruch 1, 2 oder 3, dadurch gekennzeichnet, daß die Steigbahnen (11, 12) in Auflaufrichtung gesehen in einen Bereich übergehen, der konzentrisch zur äußeren Krümmung der ersten Bremsbacke (2) verläuft.

5. Auflauf-Radbremse nach Anspruch 1, 3 oder 4, dadurch gekennzeichnet, daß die Welle (7) des das Zuspannglied bildenden Zuspann-Nokkens (8) fest im Widerlager (4), welches an der Radachse (15) befestigt ist, gelagert ist.

## Claims

1. An overrun wheel brake comprising two brake shoes in a servo arrangement, which are supported by way of a floating pin against each other and against an abutment, characterised by the following features:

a) the first brake shoe (2) which is applied in forward travel is mounted on at least one guide cam or a guide roller (9, 10) or the like of a carrier (6),

b) the carrier (6) can be expanded towards the brake drum (1) by an operating member comprising an operating cam (8) which is arranged eccentrically on a shaft (7) and which acts in the direction of overrun application of the first brake shoe (2),

c) the first brake shoe (2) is provided with lifting surfaces (11, 12) in the regions in which the first brake shoe bears against the guide cams or the guide rollers (9, 10) or the like,

d) the lifting surfaces (11, 12), with the outside curvature of the brake shoe (2), each enclose a tapered area which tapers inwardly in the direction of overrun application of the brake,

e) at its end remote from the operating member (8), the carrier (6) is supported against the second brake shoe (3) by way of the pin (5).

2. A wheel brake according to claim 1 characterised in that the shaft (7) of the operating cam (8) forming the operating member is fixedly mounted in the plate (16).

3. A wheel brake according to claim 1 or claim 2 characterised in that the abutment (4) is secured to the wheel axle (15).

4. A wheel brake according to claim 1, claim 2 or claim 3 characterised in that the lifting surfaces (11, 12), as viewed in the direction of overrun application, merge into a region which extends concentrically with respect to the outside curvature of the first brake shoe (2).

5. A wheel brake according to claim 1, claim 3 or claim 4 characterised in that the shaft (7) of the operating cam (8) forming the operating member is fixedly mounted in the abutment (4) which is secured to the wheel axle (15).

## Revendications

1. Frein à inertie pour roue, comportant deux secteurs montés en série, qui prennent appui l'un sur l'autre par l'intermédiaire d'un doigt monté flottant, ainsi que sur un organe de butée, caractérisé en ce que:

(a) le secteur primaire (2), serré en marche avant, est monté sur au moins une came, un galet (9, 10) ou autre organe de guidage similaire d'un support (6),

(b) le support (6) peut être écarté contre le tambour (1) par un organe de serrage constitué par une came (8) montée excentrique sur un arbre (7) et agissant dans le sens de serrage du secteur primaire (2),

(c) le secteur primaire (2) est muni de rampes (11, 12) dans les zones où il est appliqué sur les cames, galets (9, 10) ou autres organes de guidage similaires,

(d) les rampes (11, 12) définissent chacune entre elles et la courbure extérieure du secteur primaire (2) un espace cunéiforme qui se rétrécit dans le sens de serrage de ce secteur,

(e) le support (6) prend appui contre le secteur secondaire (3) par son extrémité éloignée de la came de serrage (8) par l'intermédiaire du doigt (5).

2. Frein selon la revendication 1, caractérisé en ce que l'arbre (7) de la came (8) qui constitue l'organe de serrage est monté fixe dans le flasque (16).

3. Frein selon la revendication 1 ou la revendication 2, caractérisé en ce que l'organe de butée (4) est fixé sur l'essieu (15).

4. Frein selon la revendication 1, 2 ou 3, caractérisé en ce que les rampes (11, 12), considérées dans le sens de serrage, se raccordent à une zone concentrique à la courbure extérieure du secteur primaire (2).

5. Frein selon la revendication 1, 3 ou 4, caractérisé en ce que l'arbre (7) de la came (8) qui constitue l'organe de serrage est monté fixe dans l'organe de butée (4) fixé sur l'essieu (15).

Fig. 1

Fig. 2

Fig. 3

Fig.4